# EUROPÄISCHE PATENTSCHRIFT

(11) **EP 1 048 533 B1**
(45) Veröffentlichungstag und Bekanntmachung des Hinweises auf die Patenterteilung: **22.09.2004**
(21) Anmeldenummer: 00108099.3
(22) Anmeldetag: 26.04.2000
(51) Int. Cl.: B60R 21/28

(54) **Schutzeinrichtung mit Gassack für Kraftfahrzeug-Insassen**
Vehicle passenger airbag protection device
Dispositif à coussin gonflable de protection de passager de véhicule

(30) Priorität: 29.04.1999 DE 29907607 U
(43) Veröffentlichungstag der Anmeldung: 02.11.2000
(73) Patentinhaber: TRW Automotive Safety Systems GmbH, 63743 Aschaffenburg (DE)
(72) Erfinder: Braunschädel, Axel, 63773 Goldbach (DE)
(74) Vertreter: Kitzhofer, Thomas, Dipl.-Ing.

(56) Entgegenhaltungen:
- DE-A- 2 056 101
- GB-A- 2 306 409
- US-A- 4 964 652
- US-A- 5 366 242

## Beschreibung

Die Erfindung betrifft eine Vorrichtung zum raschen Aufblasen eines zusammengefalteten Gassacks für eine Insassen-Aufprall-Schutzeinrichtung in Kraftfahrzeugen gemäß dem Oberbegriff des Anspruchs 1.

Unter der Bezeichnung "Airbag" bekannt gewordene Schutzeinrichtungen werden bei modernen Kraftfahrzeugen inzwischen serienmäßig eingebaut. Üblich und am weitesten verbreitet sind im Lenkrad eines Kraftfahrzeuges untergebrachte Airbag-Module, die bei einem Unfall von einem Beschleunigungs-Meßwertgeber ausgelöst werden, wobei der zusammengefaltete Gassack explosionsartig aufgeblasen wird und zwischen Fahrer und Lenkrad ein Polster bildet, durch das Verletzungen verhindert, zumindest aber reduziert werden. Auch für den Beifahrer sind inzwischen entsprechende Airbag-Module serienmäßig vorgesehen. Weitere Airbag-Module, die auf bestimmte Unfallsituationen abgestimmt sind, beispielsweise auf einen Seitenaufprall, werden als Zusatzausstattung oder auch schon serienmäßig ebenfalls angeboten.

Bei allen Airbag-Modulen kann der Gassack eine optimale Schutzwirkung nur entfalten, wenn er rechtzeitig prall aufgeblasen ist. Rechtzeitig bedeutet bei Frontairbags beispielsweise innerhalb von 20 bis 40 Millisekunden. Um das zu erreichen, benutzt man meist protechnische Treibsätze, die das erforderliche Gasvolumen als Produkt chemischer Umsetzungen explosionsartig zur Verfügung stellen können.

Da ein prall aufgeblasener Gassack wie ein elastisch verformbares Federelement wirken und den eintauchenden Insassen zurückschleudern würde, muß bei allen Airbagsystemen dafür gesorgt werden, daß die Füllgase aus dem Gassack auch wieder abströmen können, weil nur so ein im wesentlichen plastisches Stoßverhalten mit optimalem Abbau kinetische Energie beim Eintauchen eines Fahrzeuginsassen erreicht werden kann. Dazu ist entweder das Material der Gassackhülle definiert gasdnrchlässig ausgelegt, oder aber es sind bei einer im wesentlichen gasundurchlässigen Gassackhülle gesonderte Abströmöffnungen vorgesehen. In beiden Fällen läßt sich nicht vermeiden, daß bereits beim Füllen des Gassacks ein mehr oder weniger großer Anteil der Füllgase abströmt und mit einem vorgegebenen Treibsatz die maximal mögliche Füllung nicht erreicht werden kann. Will man gleichwohl einen bestimmten Füllgrad erreichen, muß der Treibsatz größer ausgelegt werden, damit die als Verlust anzusehenden Menge an Füllgas, die bis zum Eintauchen des Insassen abströmt, kompensiert werden kann.

Eine Vorrichtung der eingangs genannten Art ist aus der US 4 964 652 bekannt. Eine bei Auftreten eines vorbestimmten Grenzwertes aufreißende Membran gibt einen den Gassack mit der Umgebung verbindenden Abströmkanal frei.

Die DE 20 56101 A und die GB-A-2 306 409 zeigen ebenfalls gattungsgemäße Vorrichtungen, bei denen ein Ventil im Abströmkanal vorgesehen ist.

Aufgabe der Erfindung ist es, die eingangs bezeichnete Vorrichtung dahingehend zu verbessern, daß mit der kleinst möglichen Treibmittelmenge unter Vermeidung von Füllgasverlusten und durch effizientes Einleiten der Füllgase rechtzeitig ein prall gefüllter Gassack zur Verfügung gestellt werden kann.

Diese Aufgabe wird erfindungsgemäß durch eine Vorrichtung mit den Merkmalen des Anspruchs 1 gelöst.

Mit dem zunächst geschlossenen und dann ganz oder teilweise freigegebenen Durchlaß im Gehäuse für die Aufnahme des pyrotechnischen Treibmittel ist es möglich, den Beginn des Abströmens der Füllgase aus dem Gassack zeitlich mit dem Eintauchen des Insassen in den Gassack zu koordinieren. In Verbindung mit einer gasundurchlässigen Gassackhülle kann damit ein vorzeitiges Ausströmen von Gas vermieden werden, so daß keine Gasverluste auftreten und kein Überschuß an Treibmittel benötigt wird.

Gemäß einem ersten Aspekt der Erfindung ist vorgesehen, daß der Durchlaß durch eine Berstmembran mit definiertes Festigkeit verschlossen ist. Damit kann die angestrebte zeitliche Koordination des Abströmbeginns mit dem Eintauchen des Insassen in einfacher Weise dadurch realisiert werden, daß die Festigkeit der Berstmembran auf den beim Eintauchen auftretenden plötzlichen Druckanstieg im Gassack abgestimmt wird. Das Abströmen wird also unmittelbar durch das Eintauchen ausgelöst. Zwischen dem Erreichen der maximalen Gassackfüllung und dem Eintauchen des Insassen wird der prall gefüllte Gassack quasi "auf Vorrat" gehalten und das Abströmen der Füllgase zur Erzielung des plastischen Aufprall- bzw. Stoßverhaltens beginnt erst dann, wenn die Nachgiebigkeit des Gassacks benötigt wird.

Gemäß einem zweiten Aspekt der Erfindung ist vorgesehen, daß der Durchlaß durch ein Stellglied verschlossen ist, wobei nach einer Aktivierung der Vorrichtung der Durchlaß durch das Stellglied in Abhängigkeit von wenigstens einer Meßgröße ganz oder teilweise geöffnet werden kann. Diese etwas aufwendigere Version erlaubt nicht nur die zeitliche Koordination von Abströmbeginn und Eintauchvorgang sondern auch die Festlegung des Abströmquerschnitts und damit eine Einflußnahme auf das Energieabsorptionsverhalten des Gassacks in Abhängigkeit von wenigstens einer Meßgröße. Das kann beispielsweise das Körpergewicht des betroffenen Insassen sein, das leicht mittels eines geeigneten Meßwertgebers im Fahrzeugsitz ermittelt und an die elektronische Steuereinrichtung für den Gassack weitergeleitet werden kann. Bekanntlich erfordert eine schwere Person einen härteren Gassack als eine leichte Person, weil beim Eintauchen eine höhere kinetische Energie aufgenommen werden muß. Die Härte des Gassacks wird in erster Linie durch die Gasabströmrate bestimmt. Mit einer kleinen Abströmrate kann ein harter Gassack realisiert werden, der zum optimalen Schutz für schwere Personen erforderlich ist. Umgekehrt kann ein weicher Gassack mit einer hohen Abströmrate realisiert werden, der dann leichten Personen einen optimalen Unfallschutz bietet.

Selbstverständlich können auch andere Meßwerte, wie beispielsweise Größe und Richtung der unfallbedingten Fahrzeugverzögerung zur Festlegung der Größe des Abströmquerschnitts berücksichtigt werden.

Andere vorteilhafte Ausgestattungen des Erfindungsgedankens sind in den Unteransprüchen 3 bis 17 beschrieben. Weitere Einzelheiten ergeben sich aus der nachfolgenden Beschreibung erfindungsgemäßer und beispielhafter Ausführungsformen, von denen bestimmte Merkmale bei den erfindungsgemäßen Ausführungsformen vorgesehen werden können. Die Beschreibung nimmt Bezug auf die beigefügten Zeidnungen. In den Zeichnungen zeigen:
Figur 1 eine erste beispielhafte Ausführungsform einer Vorrichtung zum Aufblasen eines Gassacks im schnitt;
Figur 2 eine Sicht auf die Unterseite der Ausführungsform gemäß Figur 1;
Figur 3 eine beispielhafte Ausführungsform mit Berstscheibe;
Figur 4 eine beispielhafte Ausführungsform mit zwei Brennkammern;
Figur 5 eine beispielhafte Ausführungsform mit Diffusor;
Figur 6 eine erfindungsgemäße Vorrichtung;
Figur 7 eine weitere erfindungsgemäße Vorrichtung;
Figur 8 eine Ausführungsform gemäß Figur 3, jedoch mit nach außen führenden Gasaustrittsöffnungen

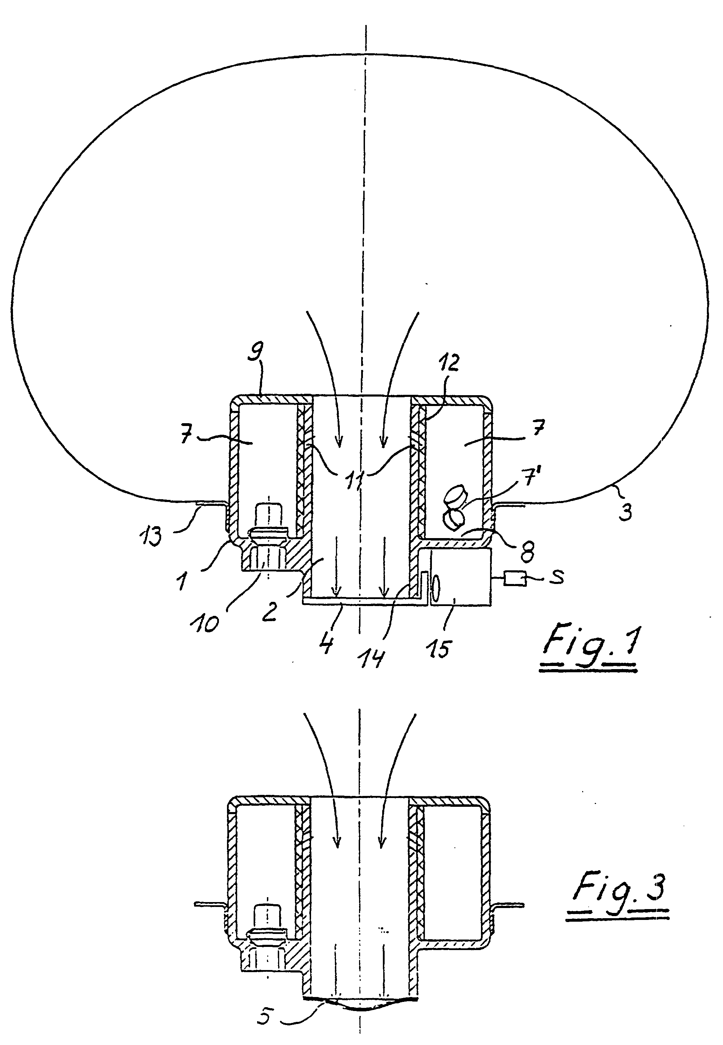

Bei der beispielhaften Ausführungsform der Vorrichtung gemäß Figur 1 ist das Gehäuse 1 für die Aufnahme eines mit 7' bezeichneten, pyrotechnischen Treibmittels und einer Zündeinrichtung 10 mit einem kreiszylindrischen Ringraum 7 ausgestattet, der im Bodenbereich 8 eine Aufnahmebohrung für eine Zündeinrichtung 10 aufweist und der durch einen Deckel 9 verschlossen ist. Das Gehäuse 1 weist außen einen umlaufenden Montageflansch 13 auf, an dem ein nur schematisch dargestellter Gassack 3 befestigt ist. Der Ringraum 7 ist in der Praxis mit einem pyrotechnischen Treibmittel (nicht dargestellt) gefüllt, das bedarfsweise durch die Zündeinrichtung gezündet werden kann und die gasförmigen Verbrennungsprodukte liefert, die zum Befüllen des Gassacks 3 erforderlich sind. Diese können durch Gasaustrittsöffnungen 11 in den Abströmkanal 2 und von dort in den Gassack 3 strömen. Die Gasaustrittsöffnungen 11 sind im dargestellten Ausführungsbeispiel durch vorgelagerte siebartige Rückhalteeinrichtungen 12 abgedeckt, die verhindern, daß Feststoffpartikel durch die Gasaustrittsöffnungen 11 in den Gassack 3 eindringen können. Außerdem kann damit dem Gas ein Teil der Wärme entzogen werden, so daß das Material des Gassacks thermisch weniger beansprucht wird. Der Abströmkanal 2 ist beim Befüllen des Gassacks 3 zunächst an seinem zum Gassack entfernten Ende durch ein aus Schieber 4 und Stellantrieb bestehendes Stellglied verschlossen, der an einer über den Bodenbereich 8 des Gehäuses 1 nach unten vorstehenden Verlängerung 14 anliegt. Zum Verstellen des Schiebers 4 in eine definierte Öffnungsstellung ist ein pyrotechnischer Stellantrieb 15 vorgesehen, der unter Berücksichtigung insassen-, fahrzeug- oder unfallspezifischer, über Sensoren S ermittelter Meßwerte aktiviert werden kann, so daß der Strömungsquerschnitt des Abströmkanals 2 bedarfsgerecht einstellbar ist. Der Abströmkanal 2 bildet einen Durchlaß für aus dem Gassack ausströmendes Gas.

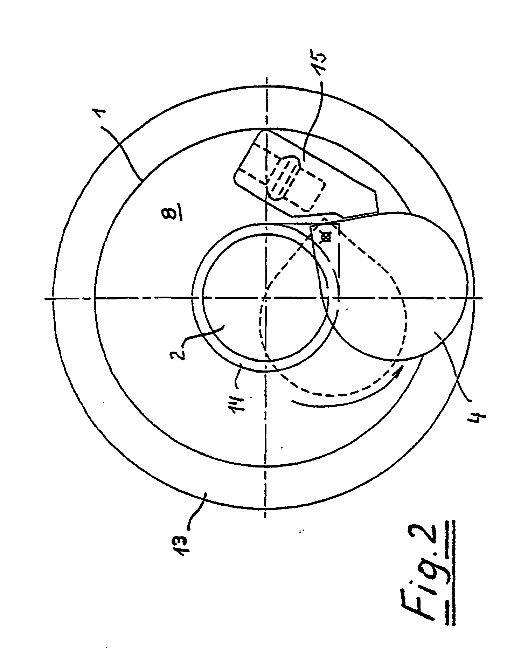

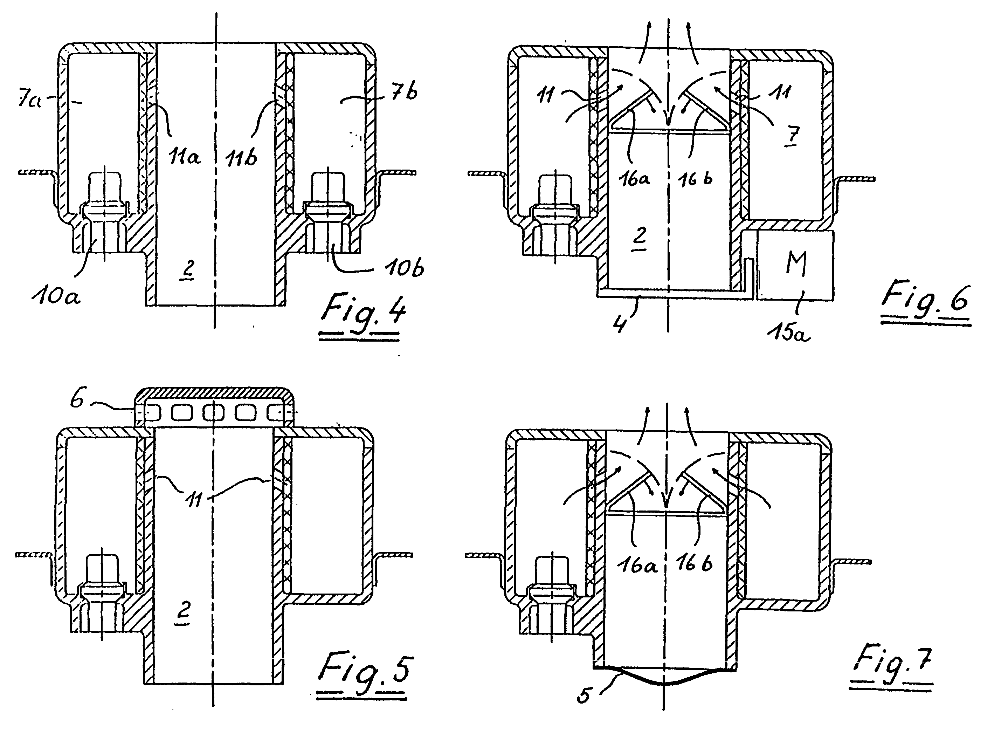

Figur 2 zeigt eine Ansicht der beispielhaften Ausführungsform gemäß Figur 1 von unten in etwas vergrößerter Darstellung ohne Gassack. Man erkennt den Bodenbereich 8 des Gehäuses 1 sowie den außen umlaufenden Montageflansch 13. Der Abströmkanal 2 endet in der nach unten vorstehefiden Verlängerung 14 und kann von dem Schieber 4 ganz oder teilweise geöffnet werden. Zur Verstellung des Schiebers 4 ist der pyrotechnische Stellantrieb 15 vorgesehen. Wie in Fig. 6 gezeigt ist, kann zur Verstellung des Schiebers 4 auch ein elektromotorischer Antrieb 15a verwendet werden.

Bei der beispielhaften Ausführungsform gemäß Figur 3 ist der Abströmkanal 2 durch eine Berstmembran 5 verschlossen, die bei einer Aktivierung der Vorrichtung aufreißt. Diese Berstmembran 5 ist in ihrer Festigkeit so ausgelegt, daß sie bei einem vorgegebenen Druck im Gassack 3 aufreißt und damit den Strömungskanal 2 freigibt. Im übrigen entspricht die Ausführungsform der Figur 3 derjenigen von Figur 1, so daß sich weitere Bezugsziffern und Erläuterungen erübrigen.

Die beispielhafte Ausführungsform gemäß Figur 4 unterscheidet sich von derjenigen gemäß Figur 1 dadurch, daß der Ringraum 7 in zwei Brennkammern 7a, 7b mit zugehörigen Zündeinrichtungen 10a, 10b sowie Gasaustrittsöff nungen 11a, 11b unterteilt ist. Diese Ausführungsform kann sowohl mit einem Schieber 4 wie auch mit einer Berstmembran 5 ausgestattet sein.

Die beispielhafte Ausführungsform gemäß Figur 5 unterscheidet sich von derjenigen gemäß Figur 1 dadurch, daß der Abströmkanal 2 an seinem dem Gassack zugewandten Ende mit einem Diffusor 6 ausgestattet ist. Derartige Diffusoren sind bekannt und dienen der Umlenkung und Verteilung des austretenden Gasstroms, um ein direktes Auftreffen des Gasstroms auf das Gassackmaterial zu vermeiden und auf das Entfalten des Gassacks Einfluß nehmen zu können. Auch diese Ausführungsform kann mit einem Schieber 4 oder einer Berstmembran 5 ausgestattet werden.

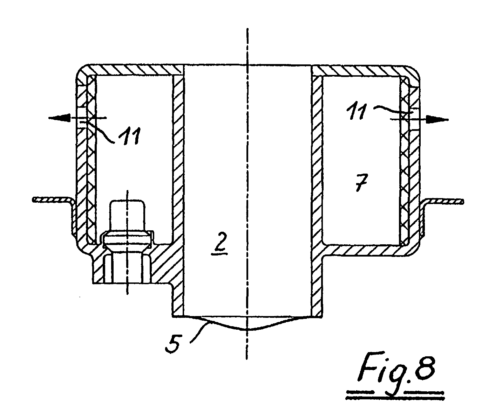

Bei den erfindungsgemäßen Ausführungsförmen mit Schieber 4 und pyrotechnischem oder elektromotorischem Stellantrieb 15, 15a (Figur 6) bzw. mit Berstmembran 5 (Figur 7) sind im Abströmkanal 2 noch Klappen 16a, 16b angeordnet. Diese Klappen wirken als Schließvorrichtung nach Art eines Rückschlagventils und werden bei einer Zündung des pyrotechnischen Treibsatzes durch die ausströmenden Gase elastisch um 90° umgeklappt, wobei sie den Abströmkanal 2 im wesentlichen solange verschließen, solange noch gasförmige Verbrennungsprodukte durch die Gasausstrittsöffnungen 11 austreten. Nach Beendigung des Ausströmens schwenken die Klappen selbsttätig in ihre Ausgangsstellung zurück und geben damit den Strömungsquerschnitt des Abströmkanals 2 wieder völlig frei.

Figur 8 zeigt eine beispielhafte Ausführungsform, bei der die Gasaustrittsöffnungen 11 nicht nach innen zum Abströmkanal 2, sondern nach außen zum Raum oberhalb des Montageflansches 13 hin gerichtet sind. Auf diese Weise können Druckspitzen beim Zünden des Treibsatzes von der Berstmembran 5 ferngehalten und eine vorzeitige Zerstörung derselben vermieden werden.

## Patentansprüche

1. Vorrichtung zum raschen Aufblasen eines zusammengefalteten Gassacks (3) für eine Insassen-Aufprall-Schutzeinrichtung in Kraftfahrzeugen, mit einem Gehäuse (10) zur Aufnahme eines pyrotechnischen Treibmittels (7') und einer Zündeinrichtung, wobei das Gehäuse (1) mit einem Durchlaß für das Abströmen der Füllgase aus dem Gassack (3) ausgestattet ist, der durch eine Berstmernbran (5) mit definierter Festigkeit oder durch ein Stellglied verschlossen ist und dessen Querschnitt nach der Aktivierung der Vorrichtung ganz oder teilweise freigegeben werden kann, **dadurch gekennzeichnet, daß** der Berstmembran (5) bzw. dem Stellglied in Ausströmrichtung eine Schließvorrichtung vorgelagert ist, die beim Füllen des Gassacks (3) vom Druck der pyrotechnischen Füllgase gegen eine Rückstellkraft geschlossen wird und nach Beendigung des Füllvorgangs selbsttätig öffnet.

2. Vorrichtung nach Anspruch 1, **dadurch gekennzeichnet, daß** der Durchlaß durch ein Stellglied verschlossen ist, das nach einer Aktivierung der Vorrichtung den Durchlaß in Abhängigkeit von wenigstens einer Meßgröße ganz oder teilweise öffnet.

3. Vorrichtung nach Anspruch 2, **dadurch gekennzeichnet, daß** als Stellglied ein Schieber (4) mit Stellantrieb vorgesehen ist.

4. Vorrichtung nach Anspruch 3, **dadurch gekennzeichnet, daß** ein elektromotorischer Stellantrieb vorgesehen ist.

5. Vorrichtung nach Anspruch 3, **dadurch gekennzeichnet, daß** ein pyrotechnischer Stellantrieb (15) vorgesehen ist.

6. Vorrichtung nach einem der Ansprüche 1 bis 5, **dadurch gekennzeichnet, daß** der Durchlaß einen rechteckigen Querschnitt aufweist und daß als Schließeinrichtung zwei elastisch rückstellbare, im Durchlaß wandseitig schwenkbar gelagerte Klappen (16a, 16b) vorgesehen sind.

7. Vorrichtung nach einem der Ansprüche 1 bis 6, **dadurch gekennzeichnet, daß** das Gehäuse (1) ringförmig ausgebildet ist und daß als Durchlaß ein zentraler Abströmkanal (2) vorgesehen ist.

8. Vorrichtung nach einem der Ansprüche 1 bis 7, **dadurch gekennzeichnet, daß** das Gehäuse (1) einen außen umlaufenden Flansch (13) zur Befestigung des Gassacks (3) aufweist.

9. Vorrichtung nach einem der Ansprüche 1 bis 8, **dadurch gekennzeichnet, daß** das Gehäuse (1) einen zylindrischen Ringraum (7) mit Bodenbereich (8) und Deckelbereich (9) definiert.

10. Vorrichtung nach Anspruch 9, **dadurch gekennzeichnet, daß** der zylindrische Ringraum (7) eine Mehrzahl von Gasaustrittsöffnungen (11) aufweist.

11. Vorrichtung nach Anspruch 10, **dadurch gekennzeichnet, daß** die Gasaustrittsöffnungen (11) in das dem Gassack (3) zugewandte Ende des Abströmkanals (2) münden.

12. Vorrichtung nach Anspruch 8 und 10, **dadurch gekennzeichnet, daß** die Gasaustrittsöffnungen (11) in der Außenwand des zylindrischen Ringraums (7) oberhalb des außen umlaufenden Flansches (13) angeordnet sind.

13. Vorrichtung nach Anspruch 11 oder 12, **dadurch gekennzeichnet, daß** die Gasaustrittsöffnungen (11) in Richtung des Gassacks (3) schräg nach oben verbaufend ausgebildet sind und daß ihnen eine siebartige Rückhalteeinrichtung (12) vorgelagert ist.

14. Vorrichtung nach einem der Ansprüche 9 bis 13, **dadurch gekennzeichnet, daß** im Bodenbereich (8) wenigstens eine Aufnahmebohrung für eine Zündeinrichtung (10) vorgesehen ist.

15. Vorrichtung nach einem der Ansprüche 9 bis 14, **dadurch gekennzeichnet, daß** der Abströmkanal (2) an seinem dem Gassack (3) abgewandten Ende eine über den Bodenbereich (8) des Gehäuses (1) vorstehende Verlängerung (14) bildet.

16. Vorrichtung nach einem der Ansprüche 9 bis 15, **dadurch gekennzeichnet, daß** der Abströmkanal (2) an seinem dem Gassack (3) zugewandten Ende mit einem Diffusor (6) ausgestattet ist.

17. Vorrichtung nach einem der Ansprüche 9 bis 16, **dadurch gekennzeichnet, daß** das Gehäuse (1) in zwei oder mehr Brennkammern (7a, 7b) mit zugehörigen Zündeinrichtungen (11a,11b) und Gasaustrittsöffnungen (11a, 11b) unterteilt ist.

## Claims

1. A device for rapidly inflating a folded gas bag (3) for an occupant impact protection device in a motor vehicle, comprising a housing (1) to receive a pyrotechnic propellant (7') and an ignition device, the housing (1) being equipped with a passage for the outflow of the filling gases from the gas bag (3), which passage is closed by a bursting diaphragm (5) having a defined strength or by an actuator and the cross-section of which can be exposed in whole or in part after activation of the device, **characterized in that** the bursting diaphragm (5) or the actuator is preceded in the outflow direction by a closure device, which is closed by the pressure of the pyrotechnic filling gases against a restoring force during filling of the gas bag (3) and opens automatically after termination of the filling process.

2. The device according to claim 1, **characterized in that** the passage is closed by an actuator which after an activation of the device opens the passage in whole or in part as a function of at least one measured variable.

3. The device according to claim 2, **characterized in that** a slider (4) having an actuating drive is provided as actuator.

4. The device according to claim 3, **characterized in that** an electromotive actuating drive is provided.

5. The device according to claim 3, **characterized in that** a pyrotechnic actuating drive (15) is provided.

6. The device according to any of claims 1 to 5, **characterized in that** the passage has a rectangular cross-section and that two elastically restorable flaps (16a, 16b), pivotally mounted in the passage on the wall side, are provided as closure device.

7. The device according to any of claims 1 to 6, **characterized in that** the housing (1) is constructed so as to be ring-shaped and that a central outflow duct (2) is provided as passage.

8. The device according to any of claims 1 to 7, **characterized in that** the housing (1) has an externally surrounding flange (13) for fastening the gas bag (3).

9. The device according to any of claims 1 to 8, **characterized in that** the housing (1) defines a cylindrical annular space (7) including a base region (8) and a cover region (9).

10. The device according to claim 9, **characterized in that** the cylindrical annular space (7) has a plurality of gas outlet openings (11).

11. The device according to claim 10, **characterized in that** the gas outlet openings (11) open into the end of the outflow duct (2) facing the gas bag (3).

12. The device according to claim 8 and 10, **characterized in that** the gas outlet openings (11) are arranged in the outer wall of the cylindrical annular space (7) and above the externally surrounding flange (13).

13. The device according to claim 11 or 12, **characterized in that** the gas outlet openings (11) are constructed so as to extend obliquely upwards towards the gas bag (3) and that they are preceded by a sieve-like restraint means (12).

14. The device according to any of claims 9 to 13, **characterized in that** at least one bore for receiving an ignition device (10) is provided in the base region (8).

15. The device according to any of claims 9 to 14, **characterized in that** the outflow duct (2) forms at its end facing away from the gas bag (3) an extension (14) projecting over the base region (8) of the housing (1).

16. The device according to any of claims 9 to 15, **characterized in that** the outflow duct (2) is equipped with a diffuser (6) at its end facing the gas bag (3).

17. The device according to any of claims 9 to 16, **characterized in that** the housing (1) is divided into two or more combustion chambers (7a, 7b) with associated ignition devices (10a, 10b) and gas outlet openings (11a, 11b).

## Revendications

1. Dispositif de gonflage rapide d'un coussin à gaz (3) plié pour un système de protection contre les chocs pour les passagers dans des véhicules, comportant un boîtier (1) destiné à recevoir un agent propulseur (7') pyrotechnique et un dispositif d'amorçage, le boîtier (1) étant équipé d'un passage pour l'écoulement des gaz de remplissage hors du coussin à gaz (3), qui est fermé par une membrane de rupture (5) de solidité définie ou par un actionneur et dont la section transversale peut être libérée entièrement ou partiellement après l'activation du dispositif, **caractérisé en ce que** la membrane de rupture (5) ou l'actionneur est précédé en direction d'écoulement par un dispositif de fermeture qui est fermé lors du remplissage du coussin à gaz (3) par la pression des gaz de remplissage pyrotechniques à l'encontre d'une force de rappel et qui s'ouvre automatiquement après que l'opération de remplissage est terminée.

2. Dispositif selon la revendication 1, **caractérisé en ce que** le passage est fermé par un actionneur qui après activation du dispositif, ouvre entièrement ou partiellement le passage en fonction d'au moins une grandeur mesurée.

3. Dispositif selon la revendication 2, **caractérisé en ce qu'** en tant qu'actionneur est prévu un actionneur avec poussoir (4).

4. Dispositif selon la revendication 3, **caractérisé en ce qu'**il est prévu un actionneur entraîné par moteur électrique.

5. Dispositif selon la revendication 3, **caractérisé en ce qu'**il est prévu, un actionneur (15) pyrotechnique.

6. Dispositif selon l'une des revendications 1 à 5, **caractérisé en ce que** le passage présente une section transversale rectangulaire et **en ce qu'**en tant que système de fermeture sont prévus deux volets (16a, 16b) à force de rappel élastique, montés à pivotement dans le passage côté paroi.

7. Dispositif selon l'une des revendications 1 à 6, **caractérisé en ce que** le boîtier (1) est réalisé de forme annulaire et **en ce qu'**en tant que passage est prévu un canal d'écoulement (2) central.

8. Dispositif selon l'une des revendications 1 à 7, **caractérisé en ce que** le boîtier (1) présente une bride (13) périphérique extérieure pour fixer le coussin à gaz (3).

9. Dispositif selon l'une des revendications 1 à 8, **caractérisé en ce que** le boîtier (1) définit une chambre annulaire (7) cylindrique avec zone de fond (8) et zone de couvercle (9).

10. Dispositif selon la revendication 9, **caractérisé en ce que** la chambre annulaire cylindrique (7) présente une multitude d'orifices de sortie de gaz (11).

11. Dispositif selon la revendication 10, **caractérisé en ce que** les orifices de sortie de gaz (11) débouchent dans l'extrémité du canal d'écoulement (2) qui est tournée vers le coussin à gaz (3).

12. Dispositif selon les revendications 8 et 10, **caractérisé en ce que** les orifices de sortie de gaz (11) sont agencés dans la paroi extérieure de la chambre annulaire (7) au-dessus de la bride (13) périphérique extérieure.

13. Dispositif selon la revendication 11 ou 12, **caractérisé en ce que** les orifices de sortie de gaz (11) sont réalisées en s'étendant en oblique vers le haut en direction du coussin à gaz (3) et ce qu'ils sont précédés par un dispositif de retenue (12) en forme de tamis.

14. Dispositif selon l'une des revendications 9 à 13, **caractérisé en ce que** dans la zone de fond (8) est prévu au moins un perçage de réception pour un dispositif d'amorçage (10).

15. Dispositif selon l'une des revendications 9 à 14, **caractérisé en ce que** le canal d'écoulement (2) forme à son extrémité détournée du coussin à gaz (3) un prolongement (14) faisant saillie au-delà de la zone de fond (8) du boîtier (1).

16. Dispositif selon l'une des revendications 9 à 15, **caractérisé en ce que** le canal d'écoulement (2) est équipé d'un diffuseur (6) à son extrémité tournée vers le coussin à gaz (3).

17. Dispositif selon l'une des revendications 9 à 16, **caractérisé en ce que** le boîtier (1) est divisé en deux chambres de combustion (7a, 7b) ou plus avec des dispositifs d'amorçage (10a, 10b) associés et des orifices de sortie de gaz (11a, 11b) associés.
